# EUROPÄISCHE PATENTANMELDUNG

(11) **EP 4 324 670 A1**
(43) Veröffentlichungstag der Anmeldung: **21.02.2024**
(21) Anmeldenummer: 23192291.5
(22) Anmeldetag: 19.08.2023
(51) Int. Cl.: B60J 5/10, B60P 3/34, B60P 3/37

(54) **WOHNMOBIL MIT EINER HECKKLAPPENANORDNUNG**

(30) Priorität: 19.08.2022 DE 102022121083
(71) Anmelder: Hymer GmbH & Co. KG, 88339 Bad Waldsee (DE)
(72) Erfinder: Mathias, Christian, 88427 Bad Schussenried (DE)
(74) Vertreter: Müller Schupfner & Partner Patent- und Rechtsanwaltspartnerschaft mbB

(57) **Zusammenfassung**

Wohnmobil (1) mit einer horizontal geteilten Heckklappenanordnung (2), die an einer Hecköffnung (3) vorgesehen ist, wobei die Heckklappenanordnung (2) eine untere Heckklappe (4) und eine obere Heckklappe (5) aufweist und wobei die obere Heckklappe (5) in einem Bereich einer oberen Kante (6) der Hecköffnung (3) befestigt ist. Vorgeschlagen wird, dass die untere Heckklappe (4) im Bereich einer unteren Kante (7) der Hecköffnung (3) befestigt ist.

## Beschreibung

Die Erfindung betrifft ein Wohnmobil mit einer Heckklappenanordnung, die eine obere Heckklappe und eine untere Heckklappe umfasst, wobei eine horizontale Teilung der Heckklappenanordnung vorgesehen ist.

Aus der DE 20 2007 018 286 U1 ist ein Wohnmobil mit einer horizontal geteilten Heckklappenanordnung bekannt. Durch die bekannte Heckklappenanordnung ist ein Laderaum im Wohnmobil zugänglich. Ein oberes Segement der Heckklappenanordnung ist oben um eine erste Schwenkachse schwenkbar. Das untere Segment ist um eine unten an dem oberen Segment vorgesehene Schwenkachse schwenkbar. Die Segmente der bekannten Heckklappenanordnung sind in gleicher Schwenkrichtung zu öffnen.

Aufgabe der Erfindung ist es, ein Wohnmobil mit einer Heckklappenanordnung anzugeben, das eine verbesserte Ausgestaltung und Funktionsweise aufweist.

Die Aufgabe wird durch ein Wohnmobil mit den Merkmalen des Patentanspruchs 1 gelöst. Vorteilhafte Weiterbildung der Erfindung sind in den Unteransprüchen angegeben.

Die Aufgabe wird durch ein Wohnmobil mit einer horizontal geteilten Heckklappenanordnung, die an einer Hecköffnung vorgesehen ist, gelöst, wobei die Heckklappenanordnung eine untere Heckklappe und eine obere Heckklappe aufweist, wobei die obere Heckklappe in einem Bereich einer oberen Kante der Hecköffnung befestigt ist und wobei die untere Heckklappe im Bereich einer unteren Kante der Hecköffnung befestigt ist.

Vorteilhaft ist es, dass eine Innenenseite der unteren Heckklappe und eine Innenseite der oberen Heckklappe zumindest näherungsweise gleich groß ausgestaltet sind und/oder dass eine Innenseite der oberen Heckklappe in einem aufgeklappten Zustand zumindest im Wesentlichen über einer Innenseite der unteren Heckklappe angeordnet ist. Dadurch kann bei einer besonders bevorzugten Ausgestaltung die untere Heckklappe als Raumerweiterung für einen Innenraum oder Aufenthaltsraum des Wohnmobils dienen, während durch die obere Heckklappe die Funktion eines Daches für die Raumerweiterung erzielt wird.

Vorteilhaft ist es, dass zumindest eine Begrenzungseinrichtung vorgesehen ist, die in einem aufgeklappten Zustand der unteren Heckklappe und einem aufgeklappten Zustand der oberen Heckklappe zumindest zwischen der unteren Heckklappe und der oberen Heckklappe aufbaubar, insbesondere von einem Benutzer montierbar, ist. Hierdurch kann die Nutzung der Heckklappe als Raumerweiterung weiter verbessert werden.

Vorteilhaft ist es, dass zumindest eine Begrenzungseinrichtung eine Sicherung gegen ein Herunterfallen von der aufgeklappten unteren Heckklappe bildet. Beispielsweise kann eine Brüstung realisiert werden, die vorzugsleiche sehr leicht ist.

Vorteilhaft ist es, dass zumindest eine Begrenzungseinrichtung im aufgebauten Zustand zumindest ein zumindest näherungsweise horizontal angeordnetes, längliches Begrenzungselement, insbesondere eine Begrenzungsstange, weiter insbesondere eine quer zu einer Fahrzeuglängsrichtung angeordnete Begrenzungsstange, aufweist. Durch solch ein Begrenzungselement und insbesondere eine Begrenzungsstange kann eine hohe Belastbarkeit bei geringem Gewicht realisiert werden.

Vorteilhaft ist es, dass zumindest eine Begrenzungseinrichtung im aufgebauten Zustand zumindest näherungsweise vertikal angeordnete, längliche Begrenzungselemente aufweist, die sich von den beiden hinteren Ecken der aufgeklappten unteren Heckklappe zu den beiden hinteren Ecken der aufgeklappten oberen Heckklappe erstrecken. Hierdurch kann gegebenenfalls zusammen mit weiteren Elementen, insbesondere zusammen mit einem Begrenzungselement, insbesondere einer Begrenzungsstange, ein Rahmen geschaffen werden, an den weitere Elemente, wie beispielsweise ein Netz oder eine Plane montiert werden können.

Vorteilhaft ist es, dass zumindest eine Begrenzungseinrichtung im aufgebauten Zustand ein Netz, insbesondere ein Insektennetz, aufweist, das bei aufgeklappter untererer Heckklappe und aufgeklappter oberer Heckklappe einen offenen Randbereich zwischen einem U-förmigen Rand der unteren Heckklappe und einem U-förmigen Rand der oberen Heckklappe zumindest in einem unterten Teil, insbesondere näherungsweise in einem Bereich von der unteren Heckklappe bis zu einer Mitte zwischen der unteren Heckklappe und der oberen Heckklappe, weiter insbesondere von der unteren Heckklappe bis zur oberen Heckklappe, überdeckt. Dadurch kann zum einen eine Brüstung von sehr geringem Gewicht realisiert werden. Zum anderen kann insbesondere Nachts ein wirksamer Schutz vor Insekten realisiert werden.

Vorteilhaft ist es, dass zumindest eine Begrenzungseinrichtung im aufgebauten Zustand zumindest ein aufblasbares Element aufweist, das vorzugsweise Innenzugelemente und/oder Innengewebebänder aufweist und/oder vorzugsweise als Drop-Stitch-Element ausgebildet ist. Hierdurch ist eine hohe Stabilität realisierbar, wobei gegebenenfalls auf Stangen, einen Rahmen und dergleichen verzichtet werden kann.

Vorteilhaft ist es, dass zumindest eine Begrenzungseinrichtung im aufgebauten Zustand als Sichtschutz ausgestaltet ist, der eine Sicht von außen in einen Innenraum zumindest teilweise blockiert. Dadurch kann der Nutzwert der Raumerweiterung weiter verbessert werden.

Vorteilhaft ist es, dass die Innenseite der unteren Heckklappe im aufgeklappten Zustand der unteren Heckklappe zumindest näherungweise gleich hoch angeordnet ist wie ein Laufboden im Innenraum. Hierdurch ist eine besonders gut nutzbare Raumerweiterung realisierbar.

Weitere Vorteile und Einzelheiten der Erfindung werden anhand der in den schematischen Figuren dargestellten Ausführungsbeispielen näher erläutert. Hierbei zeigen:
- Fig. 1: ein Wohnmobil mit einer Heckklappenanordnung entsprechend einem Ausführungsbeispiel in einer schematischen räumlichen Darstellung, wobei Heckklappen der Heckklappenanordnung aufgeklappt sind; und
- Fig. 2: ein Detail des in Fig. 1 gezeigten Wohnmobils an seinem Heck in einer auszugsweisen, schematischen, räumlichen Darstellung, wobei Heckklappen der Heckklappenanordnung aufgeklappt sind.

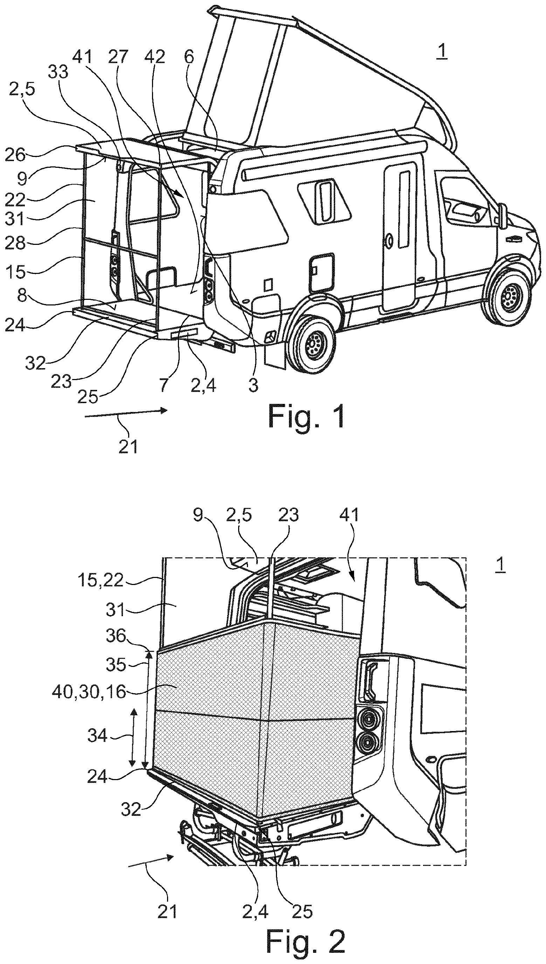

Fig. 1 zeigt ein Wohnmobil 1 mit einer Heckklappenanordnung 2 entsprechend einem Ausführungsbeispiel in einer schematischen räumlichen Darstellung. Die Heckklappenanordnung des Wohnmobils 1 ist als horizontal geteilte Heckklappenanordnung 2 ausgebildet und an einer Hecköffnung 3 des Wohnmobils 1 vorgesehen.

Die Heckklappenanordnung 2 umfasst eine untere Heckklappe 4 und eine obere Heckklappe 5, die in der Darstellung aufgeklappt sind. Die obere Heckklappe 5 ist in einem Bereich einer oberen Kante 6 der Hecköffnung 3 über geeignete Scharniere oder dergleichen angeschlagen beziehungsweise befestigt. Die untere Heckklappe 4 ist im Bereich einer unteren Kante 7 der Hecköffnung 3 befestigt. Hierbei ist die untere Heckklappe im ausgeklappten Zustand von dem Gewicht von einer oder mehreren Personen belastbar.

Eine Innenenseite 8 der unteren Heckklappe 4 und eine Innenseite 9 der oberen Heckklappe 5 sind gleich groß ausgestaltet und einander zugewandt. Die Innenseite 9 der oberen Heckklappe 5 ist in dem aufgeklappten Zustand über der Innenseite 8 der unteren Heckklappe 4 angeordnet, so dass durch die obere Heckklappe 5 die Funktion eines Daches gegeben ist. Dies ermöglicht insbesondere einen gewissen Schutz vor Sonne oder Regen.

Im folgenden ist die Ausgestaltung des Wohnmobils auch unter Bezugnahme auf Fig. 2 weiter beschrieben. Fig. 2 zeigt hierbei ein Detail des in Fig. 1 gezeigten Wohnmobils 1 an seinem Heck in einer auszugsweisen, schematischen, räumlichen Darstellung, wobei Heckklappen 4, 5 der Heckklappenanordnung 2 aufgeklappt sind.

Das Wohnmobil 1 weist ein oder mehrere Begrenzungseinrichtungen 15, 16 auf, die gegebenenfalls auf- und abbaubar sind. Hierbei können auch mehrere Begrenzungseinrichtungen 15, 16 miteinander kombinierbar sein. Denkbar ist es auch, dass Begrenzungseinrichtungen 15, 16 in Bezug auf den jeweiligen Einsatz, beispielsweise für eine Reise, bei der ein Schutz vor Stechmücken sinnvoll ist, oder eine Reise in heiße oder kalte Regionen, wählbar ist. Die Begrenzungseinrichtung 15, 16 kann dann beispielsweise in einem aufgeklappten Zustand der unteren Heckklappe 4 und einem aufgeklappten Zustand der oberen Heckklappe 5 zwischen der unteren Heckklappe 4 und der oberen Heckklappe 5 von einem Benutzer montiert werden. Es kann aber beispielsweise auch ein Aufbau durch Aufblasen einer geeignet ausgebildeten Begrenzungseinrichtung 15, 16 erfolgen.

Die Begrenzungseinrichtungen 15, 16 bilden in diesem Ausführungsbeispiel außerdem eine Sicherung gegen ein Herunterfallen von der aufgeklappten unteren Heckklappe 4. Die Begrenzungseinrichtung 15 umfasst ein horizontal angeordnetes, längliches Begrenzungselement 20, das als Begrenzungsstange 20 ausgebildet ist. Die Begrenzungsstange 20 ist quer zu einer Fahrzeuglängsrichtung 21 angeordnet. Dadurch wird ein Herunterfallen von Personen verhindert.

In diesem Ausführungsbeispiel ist die Begrenzungsstange an vertikal angeordneten, länglichen Begrenzungselemente 22, 23 der Begrenzungseinrichtung 15 befestigt, die sich von den beiden hinteren Ecken 24, 25 der aufgeklappten unteren Heckklappe 4 zu den beiden hinteren Ecken 26, 27 der aufgeklappten oberen Heckklappe 5 erstrecken. Bei einer abgewandelten Ausgestaltung kann aber auch ein ganz oder teilweise umlaufendes geländerförmiges Begrenzungselement 20 vorgesehen sein, das vorzugsweise an einer oder mehreren Stellen an der unteren Heckklappe 4 abgestützt ist.

An dem durch die Begrenzungsstange 20 und die Begrenzungselemente 22, 23 gebildeten Rahmen 28 kann eine weitere Begrenzungseinrichtung 16 zumindest teilweise befestigt sein. Die Begrenzungseinrichtung 16 ist in diesem Ausführungsbeispiel als Netz 30 ausgebildet. Das Netz 30 ist in diesem Ausführungsbeispiel ein Insektennetz 30. Bei einer abgewandelten Ausgestaltung kann das Netz 30 aber auch als Fangnetz oder dergleichen ausgebildet sein.

Das Netz 30 überdeckt ganz oder teilweise einen offenen Randbereich 31 zwischen einem U-förmigen Rand 32 der unteren Heckklappe 4 und einem U-förmigen Rand 33 der oberen Heckklappe 5. Hierbei kann das Netzt 30 auch so ausgebildet sein, dass je nach Wunsch ein mehr oder weniger großer Teil 34 des offenen Randbereichs 31 überdeckt wird. Dies kann gegebenenfalls auch von einem Nutzer variiert werden. Beispielsweise kann ein unterten Teil 34 von dem Netz 30 überdeckt sein. Dies verhindert insbesondere, dass Sachen von der unteren Heckklappe fallen beziehungsweise rollen. Ferner kann ein Bereich 35 von der unteren Heckklappe 4 bis zu einer Mitte 36 zwischen der unteren Heckklappe 4 und der oberen Heckklappe 5 überdeckt werden. Dadurch kann insbesondere eine Abstutzsicherung für Kinder realisiert werden. Ferner kann das Netz 30 auch vollständig von der unteren Heckklappe 4 bis zur oberen Heckklappe 5 reichen. Dadurch kann in zuverlässiger Weise ein Schutz vor Insekten, Sonne, Regen oder anderen Umwelteinflüssen realisiert werden.

Zumindest eine Begrenzungseinrichtung 15, 16 kann auch ein oder mehrere aufblasbare Elemente aufweisen. Zumindest ein aufblasbares Element kann Innenzugelemente und/oder Innengewebebänder aufweisen und/oder als Drop-Stitch-Element ausgebildet sein. Bei solch einer aufblasbaren Ausführung kann auch eine Isolierung durch Luftkammern realisiert werden, wenn sich die aufblasbaren Elemente von der unteren Heckklappe 4 bis zur oberen Heckklappe 5 erstrecken.

Durch beispielsweise eine zumindest teilweise lichtundurchlässige Ausgestaltung kann die Begrenzungseinrichtung 16 im aufgebauten Zustand als Sichtschutz 40 dienen. Dadurch kann eine Sicht von außen in einen Innenraum 41 verhindert werden. Vorzugsweise ist das Wohnmobil 1 so ausgestaltet, dass die Innenseite 8 der unteren Heckklappe 4 im aufgeklappten Zustand gleich hoch angeordnet ist wie ein Laufboden 42 im Innenraum 41. Dadurch kann eine vorteilhafte Raumerweiterung realisiert werden. Insbesondere kann hierdurch zumindest ein zusätzlicher temporärer Schlafplatz realisiert werden, der teilweise auf der unteren Heckklappe 4 und teilweise auf dem Laufboden realisiert ist.

Die Erfindung ist nicht auf die beschriebenen Ausführungsformen beschränkt.

## Patentansprüche

1. Wohnmobil (1) mit einer horizontal geteilten Heckklappenanordnung (2), die an einer Hecköffnung (3) vorgesehen ist, wobei die Heckklappenanordnung (2) eine untere Heckklappe (4) und eine obere Heckklappe (5) aufweist und wobei die obere Heckklappe (5) in einem Bereich einer oberen Kante (6) der Hecköffnung (3) befestigt ist,
**dadurch gekennzeichnet,**
**dass** die untere Heckklappe (4) im Bereich einer unteren Kante (7) der Hecköffnung (3) befestigt ist.

2. Wohnmobil nach Anspruch 1,
**dadurch gekennzeichnet,**
**dass** eine Innenenseite (8) der unteren Heckklappe (4) und eine Innenseite (9) der oberen Heckklappe (5) zumindest näherungsweise gleich groß ausgestaltet sind und/oder dass eine Innenseite (9) der oberen Heckklappe (5) in einem aufgeklappten Zustand zumindest im Wesentlichen über einer Innenseite (8) der unteren Heckklappe (4) angeordnet ist.

3. Wohnmobil nach Anspruch 1 oder 2,
**dadurch gekennzeichnet,**
**dass** zumindest eine Begrenzungseinrichtung (15, 16) vorgesehen ist, die in einem aufgeklappten Zustand der unteren Heckklappe (4) und einem aufgeklappten Zustand der oberen Heckklappe (5) zumindest zwischen der unteren Heckklappe (4) und der oberen Heckklappe (5) aufbaubar, insbesondere von einem Benutzer montierbar, ist.

4. Wohnmobil nach Anspruch 3,
**dadurch gekennzeichnet,**
**dass** zumindest eine Begrenzungseinrichtung (15, 16) eine Sicherung gegen ein Herunterfallen von der aufgeklappten unteren Heckklappe (4) bildet.

5. Wohnmobil nach Anspruch 3 oder 4,
**dadurch gekennzeichnet,**
**dass** zumindest eine Begrenzungseinrichtung (15) im aufgebauten Zustand zumindest ein zumindest näherungsweise horizontal angeordnetes, längliches Begrenzungselement (20), insbesondere eine Begrenzungsstange (20), weiter insbesondere eine quer zu einer Fahrzeuglängsrichtung (21) angeordnete Begrenzungsstange (20), aufweist.

6. Wohnmobil nach einem der Ansprüche 3 bis 5,
**dadurch gekennzeichnet,**
**dass** zumindest eine Begrenzungseinrichtung (15) im aufgebauten Zustand zumindest näherungsweise vertikal angeordnete, längliche Begrenzungselemente (22, 23) aufweist, die sich von den beiden hinteren Ecken (24, 25) der aufgeklappten unteren Heckklappe (4) zu den beiden hinteren Ecken (26, 27) der aufgeklappten oberen Heckklappe (5) erstrecken.

7. Wohnmobil nach einem der Ansprüche 3 bis 6,
**dadurch gekennzeichnet,**
**dass** zumindest eine Begrenzungseinrichtung (16) im aufgebauten Zustand ein Netz (30), insbesondere ein Insektennetz (30), aufweist, das bei aufgeklappter untererer Heckklappe (4) und aufgeklappter oberer Heckklappe (5) einen offenen Randbereich (31) zwischen einem U-förmigen Rand (32) der unteren Heckklappe (4) und einem U-förmigen Rand (33) der oberen Heckklappe (5) zumindest in einem unterten Teil (34), insbesondere näherungsweise in einem Bereich (35) von der unteren Heckklappe (4) bis zu einer Mitte (36) zwischen der unteren Heckklappe (4) und der oberen Heckklappe (5), weiter insbesondere von der unteren Heckklappe (4) bis zur oberen Heckklappe (5), überdeckt.

8. Wohnmobil nach einem der Ansprüche 3 bis 7,
**dadurch gekennzeichnet,**
**dass** zumindest eine Begrenzungseinrichtung (15, 16) im aufgebauten Zustand zumindest ein aufblasbares Element aufweist, das vorzugsweise Innenzugelemente und/oder Innengewebebänder aufweist und/oder vorzugsweise als Drop-Stitch-Element ausgebildet ist.

9. Wohnmobil nach einem der Ansprüche 3 bis 8,
**dadurch gekennzeichnet,**
**dass** zumindest eine Begrenzungseinrichtung (16) im aufgebauten Zustand als Sichtschutz (40) ausgestaltet ist, der eine Sicht von außen in einen Innenraum (41) zumindest teilweise blockiert.

10. Wohnmobil nach einem der Ansprüche 1 bis 9,
**dadurch gekennzeichnet,**
**dass** die Innenseite (8) der unteren Heckklappe (4) im aufgeklappten Zustand der unteren Heckklappe (4) zumindest näherungweise gleich hoch angeordnet ist wie ein Laufboden (42) im Innenraum (41).
